# FASCICULE DE BREVET EUROPEEN

(11) **EP 2 591 979 B1**
(45) Date de publication et mention de la délivrance du brevet: **25.06.2014**
(21) Numéro de dépôt: 12190863.6
(22) Date de dépôt: 31.10.2012
(51) Int. Cl.: B62D 5/083, B62D 5/09, B62D 5/07

(54) **Valve d'assistance pour direction à assistance hydraulique de véhicule automobile**
Hilfsventil für hydraulische Servolenkung eines Kraftfahrzeugs
Assistance valve for hydraulic power-steering of an automobile vehicle

(30) Priorité: 08.11.2011 FR 1160148
(43) Date de publication de la demande: 15.05.2013
(73) Titulaire: Jtekt Europe, 69540 Irigny (FR)
(72) Inventeur: Ray, Jean, 69110 Sainte Foy Les Lyon (FR)
(74) Mandataire: Chevalier, Renaud Philippe

(56) Documents cités:
- EP-A2- 0 773 156
- WO-A1-2011/106025
- DE-A1-102006 005 653
- JP-A- 2002 347 636

## Description

La présente invention se rapporte, d'une manière générale, aux systèmes de direction à assistance hydraulique, qui équipent les véhicules automobiles. Plus particulièrement, cette invention concerne une valve d'assistance, destinée à une direction à assistance hydraulique de véhicule automobile.

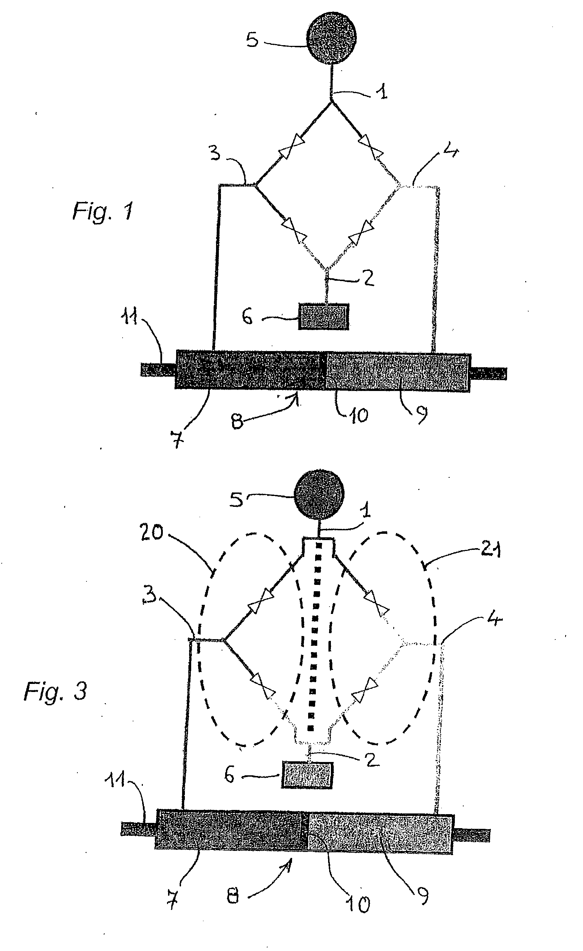

Une direction à assistance hydraulique comporte un vérin hydraulique à double effet, qui transmet à la crémaillère un effort amplifiant l'action exercée manuellement par le conducteur du véhicule sur le volant de conduite. La direction à assistance électrique comporte aussi, de façon habituelle, une valve d'assistance qui réalise la fonction de distribution de fluide hydraulique vis-à-vis du vérin d'assistance. Conçue comme une valve rotative, la valve d'assistance fonctionne comme une valve hydraulique à quatre voies, avec (comme l'illustre schématiquement la figure 1 du dessin annexé) :
- Une première voie 1 pour l'admission d'un fluide hydraulique sous pression, délivré par une pompe 5,
- Une deuxième voie 2 pour le retour du fluide hydraulique vers un réservoir 6,
- Une troisième voie 3 pour l'alimentation, en fluide hydraulique sous pression, d'une chambre 7 du vérin d'assistance 8, et
- Une quatrième voie 4 pour l'alimentation, en fluide hydraulique, de l'autre chambre 9 du vérin d'assistance 8.

Les deux chambres 7 et 9 du vérin d'assistance 8 sont séparées par un piston 10, solidaire en translation de la crémaillère 11.

A l'intérieur de la valve d'assistance, les quatre voies sont reliées par des conduits internes montés à la manière d'un « pont de Wheatstone » (par analogie avec un pont de résistances électriques), selon le schéma hydraulique montré sur la figure 1, avec quatre orifices internes qui s'ouvrent et se ferment alternativement deux à deux.

La valve d'assistance étant une valve rotative, ses conduits et orifices internes sont formés sur un rotor et sur une chemise rotative entourant coaxialement le rotor, le rotor et la chemise étant pourvus de rainures respectives pouvant venir en correspondance ou non selon la position angulaire relative du rotor et de la chemise, pour réaliser les ouvertures et fermetures simultanées des orifices. En théorie, deux rainures sur le rotor et deux autres rainures sur la chemise devraient suffire au bon fonctionnement hydraulique de la valve d'assistance. Toutefois, mécaniquement parlant, le nombre de rainures doit être de six au minimum, afin que la résultante des efforts radiaux due aux écarts de pression s'annule sur l'axe central de la valve. Le document de brevet JP 2002-347636 montre clairement un agencement connu à six rainures. DE 10 2006 005653 A1 est considéré comme l'art antérieur le plus proche, selon le préambule de la revendication 1.

Dans la conception traditionnelle, la valve rotative d'assistance, réalisée selon le principe précédemment rappelé, est implantée sur le véhicule à la jonction de la colonne de direction et du carter de direction qui loge la crémaillère et le vérin d'assistance. Le rotor de la valve d'assistance est lié, par l'intermédiaire d'une barre de torsion, au pignon de direction qui vient en prise avec la crémaillère, tandis que la chemise de la valve est liée en rotation directement avec le pignon de direction. L'extrémité extérieure du rotor est en outre liée en rotation à la colonne de direction. Ainsi, la valve d'assistance fournit une pression de fluide hydraulique qui est une fonction croissante du couple appliqué sur cette valve et déformant la barre de torsion, donc une fonction directe du couple exercé par le conducteur sur le volant.

A titre d'exemples d'une telle réalisation et implantation de la valve d'assistance, il est fait référence au brevet français FR 2 752 809 et au brevet européen EP 1 167 159, au nom du Demandeur (précédemment dénommé SOCIETE DE MECANIQUE D'IRIGNY).

Comme on le comprend, cette conception traditionnelle lie mécaniquement la valve d'assistance à la colonne de direction ainsi qu'à l'ensemble pignon - crémaillère - vérin du système de direction. La commande de la valve en rotation s'effectue ainsi d'une manière invariablement imposée par les éléments mécaniques adjacents et en particulier par les positions relatives instantanées de ces éléments. Le fonctionnement de la direction à assistance électrique se fait donc en ignorant certains paramètres et n'est pas optimisé ; en particulier, la commande de déplacement de la crémaillère par le système d'assistance peut manquer de progressivité et de précision.

Une voie d'amélioration déjà proposée consiste à désolidariser mécaniquement la valve d'assistance de la colonne de direction et de l'ensemble pignon - crémaillère - vérin, la valve d'assistance devenant ainsi un organe autonome, dont la commande en translation ou en rotation est réalisée par un moteur ou actionneur électrique - voir par exemple les documents de brevets EP 1 659 047 ou US 2006/175 118, pour une commande en translation, et les documents de brevets DE 198 40 625 et US 6 305 490, pour une commande en rotation.

La valve rotative peut alors être placée par exemple au-dessus du carter de direction, mais à distance de la colonne de direction, et être raccordée par de courts conduits hydrauliques aux deux chambres du vérin d'assistance.

Toutefois, le pilotage angulaire d'une telle valve rotative reste délicat. En effet, l'amplitude angulaire du mouvement d'ouverture et de fermeture est faible et ne peut atteindre une valeur supérieure à 15°, compte tenu du nombre minimum nécessaire de six rainures à prévoir sur le rotor et sur la chemise pour équilibrer les efforts, comme expliqué plus haut.

Cette limitation angulaire résulte aussi du fait que la valve d'assistance, bien qu'implantée en un endroit autre que dans les réalisations traditionnelles, conserve pour ses conduits et orifices internes la configuration en « pont de Wheatstone » exposée plus haut avec référence à la figure 1.

La présente invention vise à éliminer ces inconvénients, donc à permettre une rotation d'amplitude angulaire plus importante pour une valve d'assistance rotative désolidarisée des composants mécaniques du système de direction, tout en conservant l'équilibrage des efforts.

A cet effet, l'invention a pour objet une valve d'assistance pour direction à assistance hydraulique de véhicule automobile, la valve d'assistance étant de type rotatif et désolidarisée de la colonne de direction, et cette vanne étant commandée par des moyens moteurs électriques entraînant en rotation au moins un élément tel que rotor ou chemise, ladite valve d'assistance étant essentiellement caractérisée par le fait qu'elle comprend deux ensembles, connectés hydrauliquement ou non, composés chacun d'un rotor et d'une chemise entourant le rotor, des rainures au nombre de trois étant prévues sur l'extérieur du rotor et sur l'intérieur de la chemise de chaque ensemble, et les moyens moteurs électriques étant prévus pour entraîner en rotation les rotors ou les chemises des deux ensembles précités, chaque ensemble rotor - chemise étant prévu pour l'alimentation en fluide hydraulique de l'une des deux chambres d'un vérin d'assistance.

Ainsi, l'idée inventive consiste à répartir les conduits et orifices internes d'une valve d'assistance sur deux ensembles composés chacun d'un rotor et d'une chemise, ce qui permet de réduire de six à trois le nombre de rainures sur chaque rotor et sur chaque chemise. En se référant à l'analogie électrique précédemment considérée, chaque ensemble composé d'un rotor et d'une chemise équivaut alors à un « demi-pont ». Grâce à la réduction du nombre des rainures, il devient possible d'augmenter significativement l'amplitude de rotation, cette amplitude angulaire pouvant devenir trois ou quatre fois plus importante que celle du rotor d'une valve d'assistance traditionnelle, tout en conservant l'équilibrage des efforts puisque trois rainures sont toujours prévues.

Dans un mode de réalisation préféré de cette valve d'assistance, les deux ensembles composés chacun d'un rotor et d'une chemise sont disposés coaxialement, et leurs éléments rotatifs respectifs, rotors ou chemises, sont accouplés entre eux et à un unique moteur électrique, commun à ces éléments rotatifs et pouvant être disposé suivant le même axe.

En particulier, les deux rotors peuvent être liés en rotation entre eux ainsi qu'à un unique moteur électrique, ces deux rotors tournant dans des chemises fixes respectives.

D'une manière inverse, les deux rotors peuvent être fixes, tandis que les chemises sont reliées entre elles et tournent autour des rotors respectifs, tout en étant accouplées à un moteur électrique unique. Le plus grand diamètre des chemises permet de les entraîner en rotation de façon motorisée avec une démultiplication réalisée par une courroie crantée ou par des engrenages, ce qui facilite l'adoption d'un moteur électrique de type « pas à pas » pour leur entraînement. (Dans ce dernier cas, le terme « rotor » ne signifie pas un élément rotatif, mais un élément intérieur par référence à la chemise entourant ce rotor).

L'admission et les sorties de fluide hydraulique sont situées avantageusement sur la partie fixe, qui comprend les chemises dans le premier cas et les rotors dans le second cas, la réunion des deux ensembles rotor - chemise réalisant fonctionnellement l'équivalent d'une valve d'assistance à quatre voies, telle que décrite en introduction avec référence à la figure 1, une seule et même pompe alimentant les deux ensembles en fluide hydraulique.

D'autres modes de réalisation peuvent être envisagés, pour des fonctionnements plus particuliers.

Ainsi, dans une variante, pour chacun des deux ensembles composés d'un rotor et d'une chemise, l'élément rotatif tel que rotor ou chemise est accouplé à un moteur électrique distinct, et chacun de ces deux ensembles est aussi alimenté en fluide hydraulique par une pompe distincte. La double valve rotative alors obtenue permet d'obtenir des variations de pression différentes et indépendantes dans les deux chambres du vérin d'assistance, en créant ainsi une chambre de vérin active et une chambre de vérin résistive au même moment. Certes plus complexe donc plus coûteuse, en raison du doublement du moteur et de la pompe, cette variante permet d'améliorer les performances du système de direction, notamment en limitant les remontées d'efforts dans le volant dues au mauvais état des routes et aussi en facilitant le pilotage en déplacement de la crémaillère, avec amélioration de la progressivité et de la précision.

De toute façon, l'invention sera mieux comprise à l'aide de la description qui suit, en référence au dessin schématique annexé représentant, à titre d'exemple, quelques formes d'exécution de cette valve d'assistance :
Figure 1 (déjà mentionnée) est un schéma de principe fonctionnel d'une valve d'assistance traditionnelle, associée à un vérin d'assistance ;
Figure 2 représente un système de direction équipé d'une valve d'assistance conforme à la présente invention ;
Figure 3 est un schéma de principe fonctionnel de la valve d'assistance selon l'invention ;
Figures 4 et 5 sont des vues en perspective d'un premier mode de réalisation de cette valve d'assistance, à moteur unique ;
Figures 6 et 7 sont des vues en perspective d'un rotor de la valve d'assistance ;
Figures 8 et 9 sont des vues en perspective d'une chemise de la valve d'assistance ;
Figures 10 et 11 sont des vues en perspective d'un deuxième mode de réalisation de cette valve d'assistance, encore à moteur unique ;
Figure 12, 13 et 14 sont des vues en perspective d'un troisième mode de réalisation, à deux moteurs ;
Figures 15, 16 et 17 sont des vues en perspective d'un quatrième mode de réalisation, également à deux moteurs.

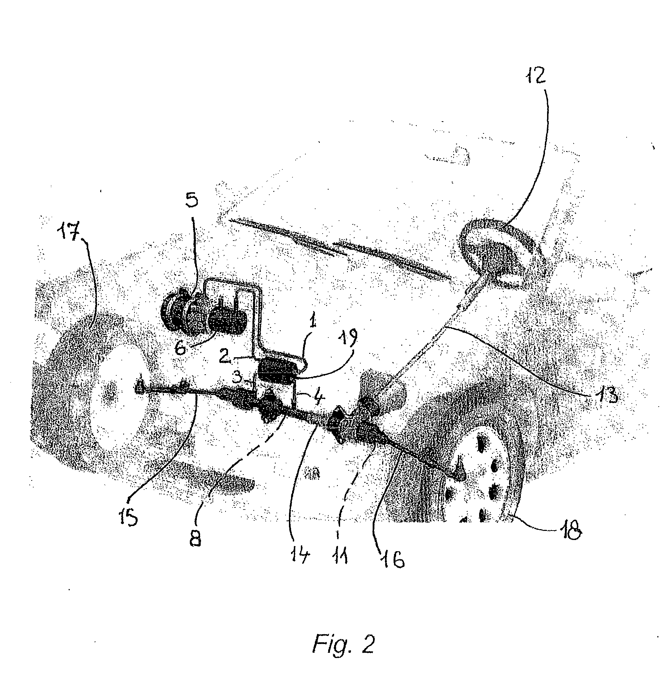

Comme le montre la figure 2, un système de direction de véhicule automobile comprend un volant de conduite 12 relié, par une colonne de direction 13, à un pignon de direction (non visible) en prise avec la crémaillère 11, montée mobile en translation en direction longitudinale dans un carter de direction 14. Les deux extrémités de la crémaillère 11, extérieures au carter de direction 14, sont accouplées respectivement à deux biellettes de direction 15 et 16, associées respectivement aux roues directrices droite 17 et gauche 18 du véhicule.

S'agissant ici d'une direction à assistance hydraulique, le carter de direction 14 renferme un vérin hydraulique à double effet 8, désigné comme vérin d'assistance, qui transmet à la crémaillère 11 un effort amplifiant l'action exercée manuellement par le conducteur du véhicule sur le volant de conduite 12. Une valve rotative d'assistance 19, placée au-dessus du carter de direction 14, reçoit un fluide hydraulique sous pression délivré par une pompe 5, et distribue ce fluide vers le vérin d'assistance 8. La valve rotative d'assistance 19 est dissociée de la colonne de direction 13 et de l'ensemble pignon-crémaillère-vérin, cette valve étant commandée par des moyens moteurs électriques qui entraînent en rotation au moins l'un de ses éléments, comme précisé plus bas.

Considérée globalement, la valve rotative d'assistance 19 équivaut hydrauliquement à une valve à quatre voies, avec une première voie 1 pour l'admission du fluide délivré par la pompe 5, une deuxième voie 2 pour le retour de ce fluide vers le réservoir 6, une troisième voie 3 pour l'alimentation de l'une des chambres du vérin d'assistance 8, et une quatrième voie 4 pour l'alimentation de l'autre chambre de ce vérin. Selon le principe illustré schématiquement par la figure 3, la valve rotative d'assistance 19 est cependant divisée en deux ensembles similaires 20 et 21, comparables à deux « demi-ponts », connectés hydrauliquement l'un à l'autre. Les deux ensembles 20 et 21 sont, l'un et l'autre, reliés aux voies 1 et 2, respectivement d'admission du fluide délivré par la pompe 5 et de retour de ce fluide vers le réservoir 6. Le premier ensemble 20 comporte la voie 3 pour l'alimentation d'une chambre 7 du vérin d'assistance 8. Le second ensemble 21 comporte la voie 4 pour l'alimentation de l'autre chambre 9 du même vérin d'assistance 8.

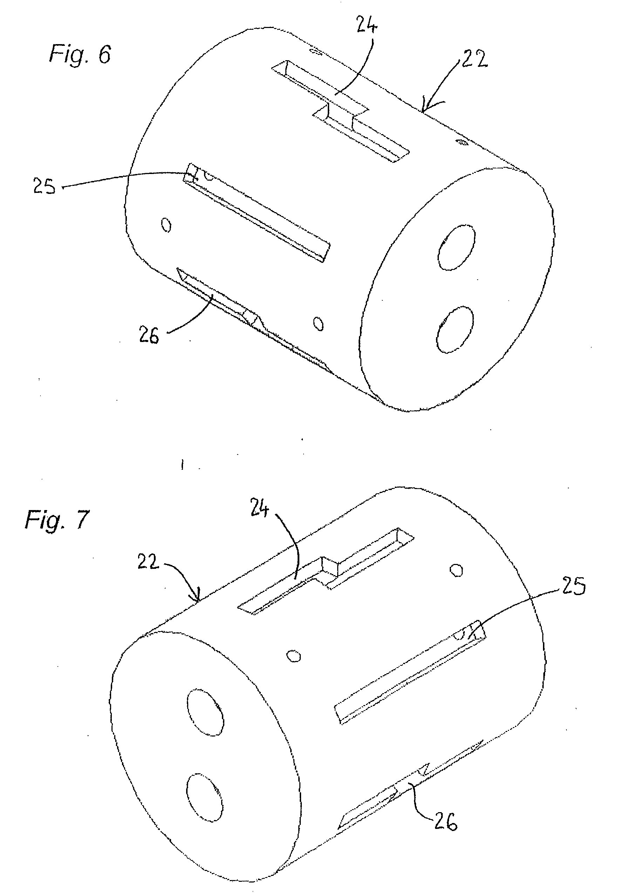

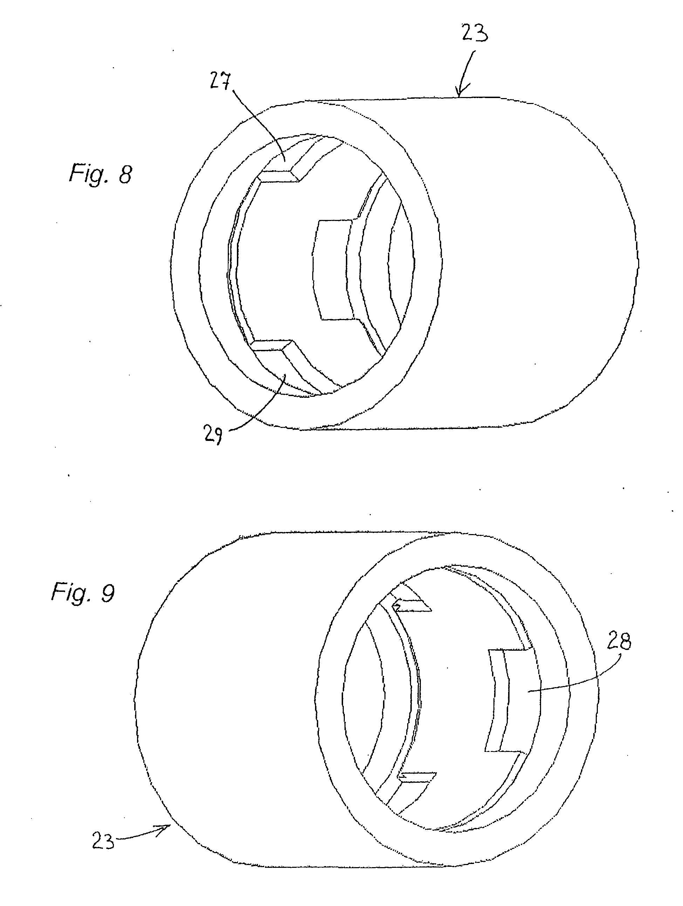

Chaque ensemble 20 ou 21 est composé d'un élément intérieur cylindrique dit « rotor » 22, et d'un élément extérieur annulaire dit « chemise » 23 qui entoure coaxialement le rotor 22. Le rotor 22, montré sur les figures 6 et 7, comporte sur sa périphérie trois rainures 24, 25 et 26. La chemise 23, montrée sur les figures 8 et 9, présente intérieurement trois rainures 27, 28 et 29.

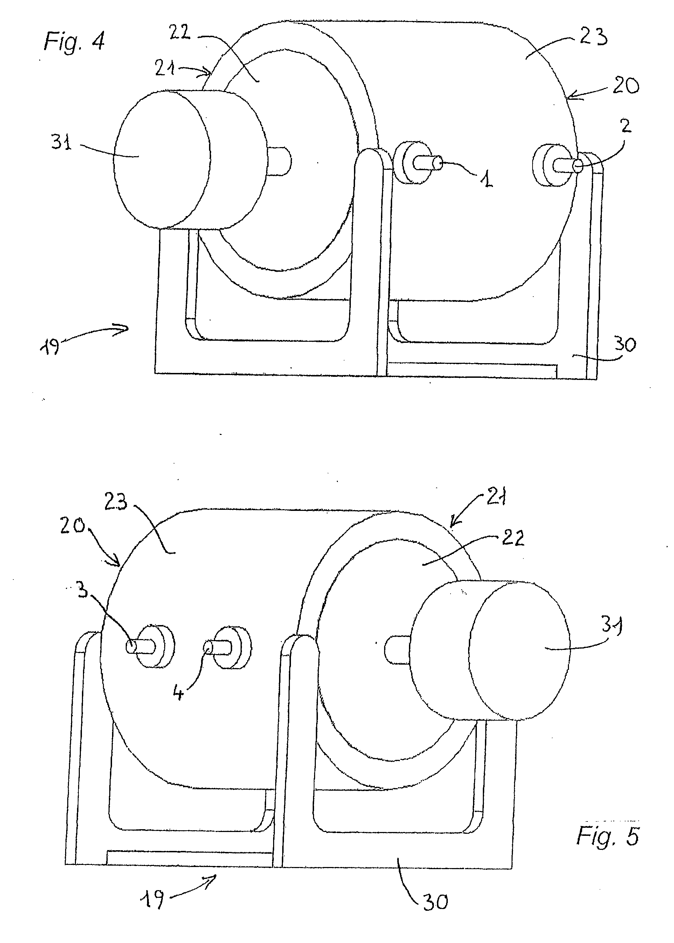

Dans un premier mode de réalisation, montré sur les figures 4 et 5, les rotors 22 respectifs des deux ensembles 20 et 21 sont disposés coaxialement et accouplés mécaniquement entre eux, ces rotors 22 étant montés rotatifs sur un bâti commun 30. Les chemises 23 respectives des deux ensembles 20 et 21, entourant les deux rotors 22, sont solidarisées et montées fixes sur le bâti 30, ces deux chemises 23 pouvant être réunies en un corps fixe unique, sur lequel sont placées les différentes voies 1 à 4.

L'ensemble des deux rotors 22 est accouplé à un unique moteur électrique 31, placé à une extrémité de la valve d'assistance 19 coaxialement aux rotors 22 et aux chemises 23. Ainsi, l'actionnement du moteur électrique 31 met en rotation simultanément les deux rotors 22 en les faisant tourner à l'intérieur des chemises 23 correspondantes. En conséquence, dans chaque ensemble 20 ou 21, les positions relatives des rainures 24, 25, 26 du rotor 22 et des rainures 27, 28, 29 de la chemise 23 sont modifiables, de manière à gérer l'alimentation des deux chambres 7 et 9 du vérin d'assistance 8, en fonction des besoins d'assistance de chaque instant.

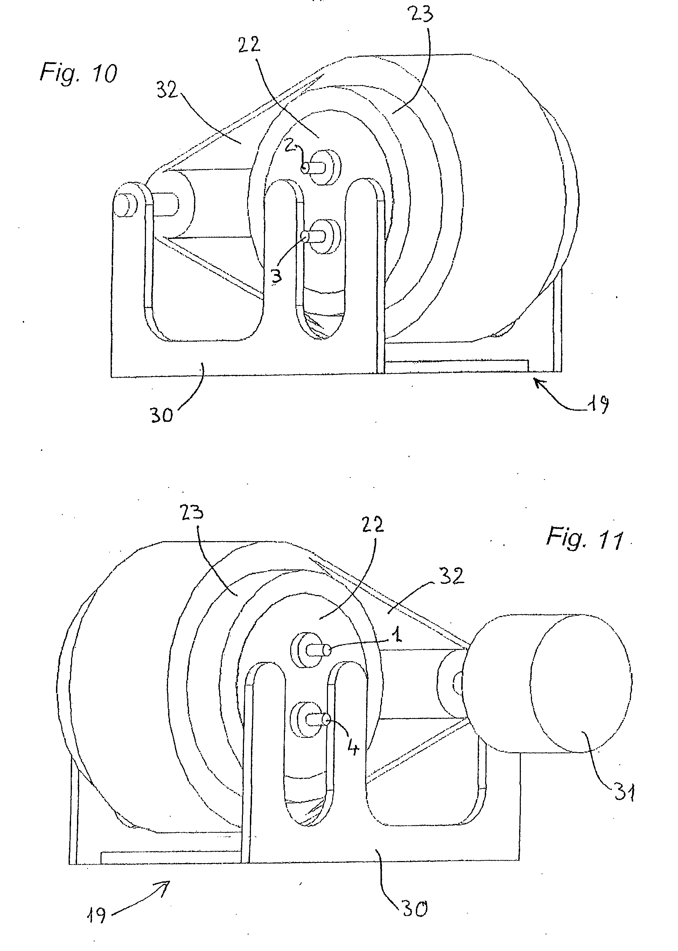

Dans un deuxième mode de réalisation, montré sur les figures 10 et 11, les rôles du rotor et de la chemise sont inversés, autrement dit les deux rotors 22 sont montés fixes sur le bâti 30 tandis que les deux chemises 23, réunies en un corps unique, sont montées tournantes autour des rotors 22 respectifs. Un moteur électrique 31, placé sur le côté de la valve d'assistance 19, entraîne en rotation l'ensemble des deux chemises 23 par l'intermédiaire d'une courroie crantée 32 passant autour de ces chemises. Dans ce mode de réalisation alternatif, les différentes voies 1 à 4 sont situées sur l'ensemble fixe formé par les deux rotors 22, en particulier sur les faces frontales de cet ensemble.

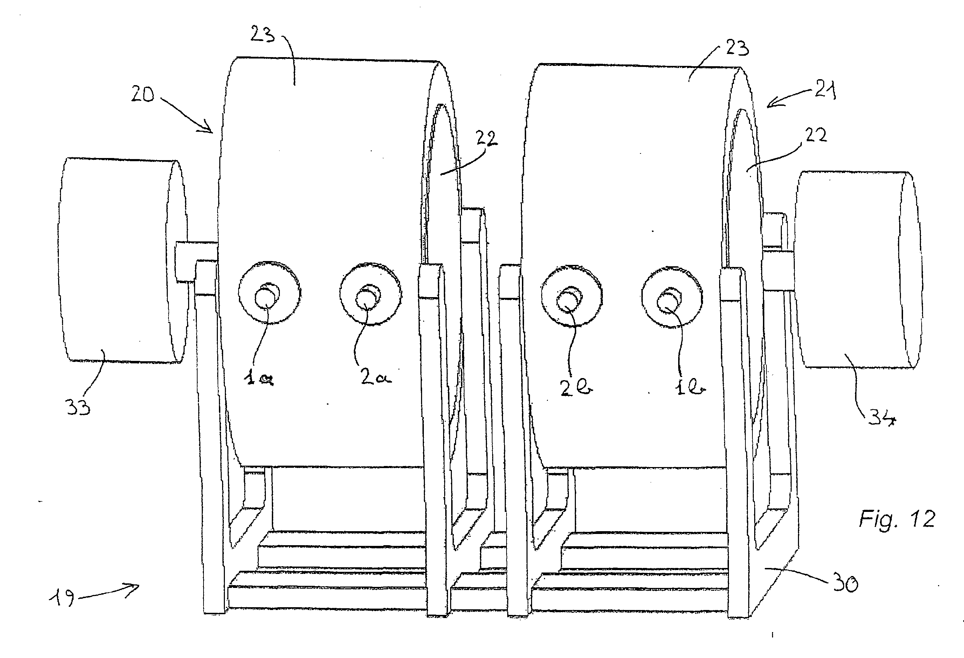

Alors que les modes de réalisation précédents comportent un moteur 31 unique, commun aux deux ensembles rotor 22 - chemise 23, les figures 12 et suivantes illustrent d'autres modes de réalisation qui comportent deux moteurs, à savoir un moteur électrique 33 associé au premier ensemble 20 et un autre moteur électrique 34 associé au second ensemble 21. Les deux ensembles 20 et 21 sont ainsi mécaniquement dissociés et peuvent aussi l'être hydrauliquement.

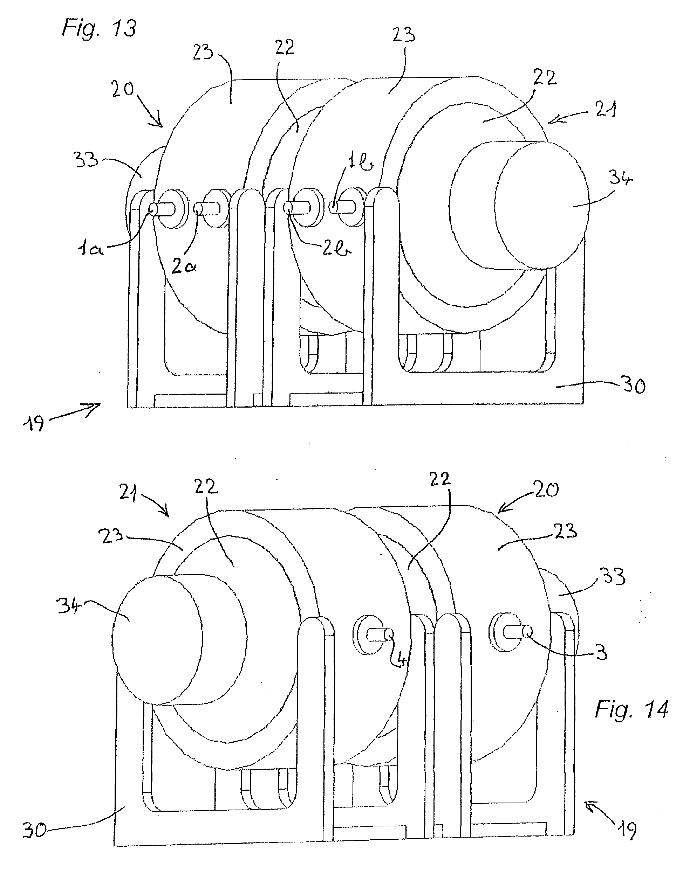

Dans le cas des figures 12, 13 et 14, les deux rotors 22 sont montés tournants relativement au bâti 30, tandis que les deux chemises 23 qui entourent respectivement les deux rotors 22 sont montées fixes sur le bâti 30. Les deux moteurs 33 et 34 sont placés aux extrémités de la valve d'assistance 19, coaxialement aux deux rotors 22, et sont accouplés respectivement à ces deux rotors 22.

La chemise 23 fixe du premier ensemble 20 comporte ici une voie 1a pour l'admission de fluide hydraulique mis en pression par une première pompe, une voie 2a pour le retour du fluide vers le réservoir, et la voie 3 pour l'alimentation de l'une des chambres du vérin d'assistance. La chemise 23 fixe du second ensemble 21 comporte une voie 1b pour l'admission du fluide hydraulique mis en pression par une seconde pompe, une voie 2b pour le retour de fluide vers le réservoir, et la voie 4 pour l'alimentation de l'autre chambre du vérin d'assistance. Ainsi, il est obtenu une double valve rotative d'assistance 19, permettant des montées en pression différentes dans chaque chambre du vérin d'assistance 8, en particulier pour créer une chambre 7 active et une chambre 9 résistive au même moment.

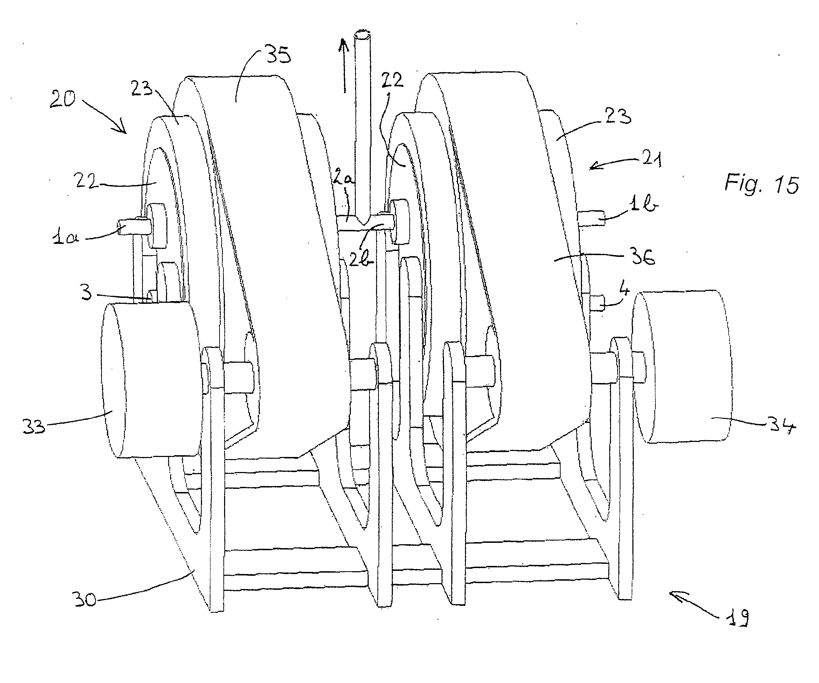

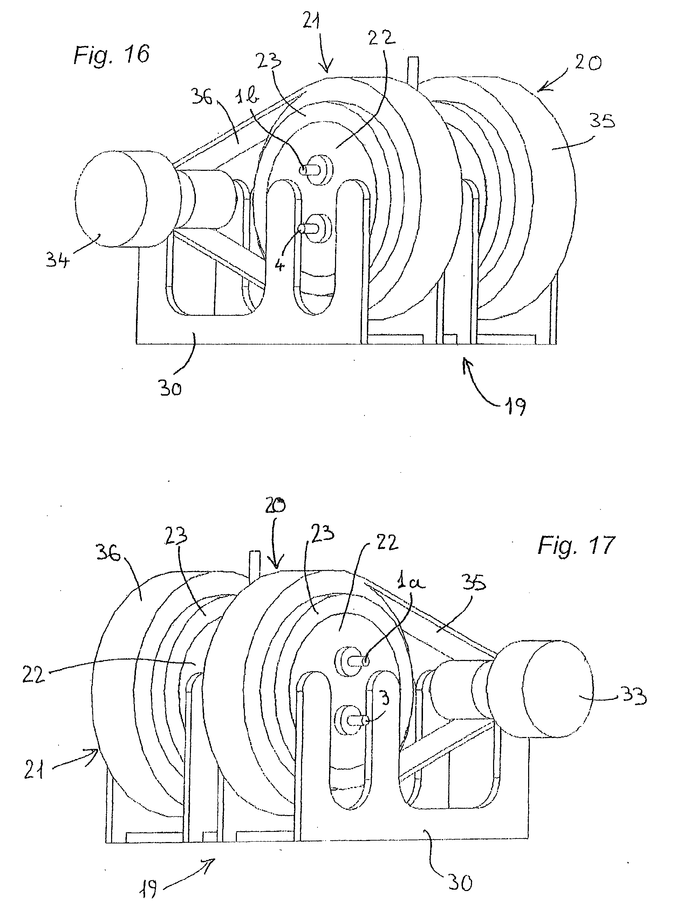

A l'inverse du cas précédent, les figures 15, 16 et 17 montrent une valve rotative d'assistance 19 avec deux rotors 22 montés fixes sur le bâti 30, et deux chemises 23 qui sont montées tournantes autour des rotors 22 respectifs. Deux moteurs 33 et 34 entraînent en rotation respectivement les deux chemises 23, par l'intermédiaire de deux courroies crantées respectivement 35 et 36, qui s'enroulent autour des deux chemises 23.

Comme il va de soi, l'invention ne se limite pas aux seules formes d'exécution de cette valve d'assistance qui ont été décrites ci-dessus, à titre d'exemples ; elle en embrasse, au contraire, toutes les variantes de réalisation et d'application respectant le même principe. C'est ainsi, notamment, que l'on ne s'éloignerait pas du cadre de l'invention en ayant recours à tous moyens équivalents, en particulier en remplaçant les transmissions à courroie crantée par des transmissions à engrenages.

## Revendications

1. Valve d'assistance pour direction à assistance hydraulique de véhicule automobile, la valve d'assistance (19) étant de type rotatif et désolidarisée de la colonne de direction (13), et cette valve étant commandée par des moyens moteurs électriques entraînant en rotation au moins un élément tel que rotor ou chemise, **caractérisée en ce qu'**elle comprend deux ensembles (20, 21), connectés hydrauliquement ou non, composés chacun d'un rotor (22) et d'une chemise (23) entourant le rotor, des rainures (24 à 29) au nombre de trois étant prévues sur l'extérieur du rotor (22) et sur l'intérieur de la chemise (23) de chaque ensemble (20, 21), et les moyens moteurs électriques (31 ; 33, 34) étant prévus pour entraîner en rotation les rotors (22) ou les chemises (23) des deux ensembles précités, chaque ensemble rotor - chemise étant prévu pour l'alimentation en fluide hydraulique de l'une des deux chambres (7, 9) d'un vérin d'assistance (8).

2. Valve d'assistance selon la revendication 1, **caractérisée en ce que** les deux ensembles (20, 21) composés chacun d'un rotor (22) et d'une chemise (23) sont disposés coaxialement, et **en ce que** leurs éléments rotatifs respectifs, rotors ou chemises, sont accouplés entre eux et à un unique moteur électrique (31), commun à ces éléments rotatifs et pouvant être disposé suivant le même axe.

3. Valve d'assistance selon la revendication 2, **caractérisée en ce que** les deux rotors (22) sont liés en rotation entre eux ainsi qu'à un unique moteur électrique (31), ces deux rotors (22) tournant dans des chemises (23) fixes respectives.

4. Valve d'assistance selon la revendication 2, **caractérisé en ce que** les deux rotors (22) sont fixes, tandis que les chemises (23) sont reliées entre elles et tournent autour des rotors (22) respectifs, tout en étant accouplées à un moteur électrique (31) unique.

5. Valve d'assistance selon l'une quelconque des revendications 1 à 4, **caractérisée en ce que** l'admission et les sorties du fluide hydraulique sont situées sur la partie fixe, qui comprend les chemises (23) ou les rotors (22), la réunion des deux ensembles (20, 21) rotor - chemise réalisant fonctionnellement l'équivalent d'une valve d'assistance (19) à quatre voies (1 à 4), une seule et même pompe (5) alimentant ces deux ensembles (20, 21) en fluide hydraulique.

6. Valve d'assistance selon la revendication 1, **caractérisée en ce que**, pour chacun des deux ensembles (20, 21) composés d'un rotor (22) et d'une chemise (23), l'élément rotatif tel que rotor ou chemise est accouplé à un moteur électrique (33, 34) distinct, et **en ce que** chacun de ces deux ensembles (20, 21) est aussi alimenté en fluide hydraulique par une pompe distincte.

## Patentansprüche

1. Servoventil für hydraulische Kraftfahrzeug-Servolenkung, wobei das Servoventil (19) von der Art eines Drehventils ist und von der Lenksäule (13) abgekoppelt ist, und wobei dieses Ventil durch Elektromotormittel gesteuert wird, die mindestens ein Element, wie etwa einen Rotor oder einen Mantel drehmäßig antreiben, **dadurch gekennzeichnet, dass** es zwei Einheiten (20, 21) umfasst, die hydraulisch verbunden sind oder nicht und jeweils aus einem Rotor (22) und einem den Rotor umgebenden Mantel (23) bestehen, wobei drei Nuten (24 bis 29) außen an dem Rotor (22) und innen an dem Mantel (23) jeder Einheit (20, 21) bereitgestellt werden, und wobei die Elektromotormittel (31; 33, 34) bereitgestellt werden, um die Rotoren (22) oder die Mäntel (23) der beiden genannten Einheiten drehmäßig anzutreiben, wobei jede Einheit aus Rotor und Mantel bereitgestellt wird, um eine der beiden Kammern (7, 9) eines Servozylinders (8) mit Hydraulikfluid zu versorgen.

2. Servoventil nach Anspruch 1, **dadurch gekennzeichnet, dass** die beiden Einheiten (20, 21), die jeweils aus einem Rotor (22) und einem Mantel (23) bestehen, koaxial angeordnet sind, und dass ihre jeweiligen Drehelemente, Rotoren oder Mäntel, untereinander und mit einem einzigen Elektromotor (31) gekoppelt sind, der von diesen Drehelementen gemeinsam genutzt wird und entlang der gleichen Achse angeordnet sein kann.

3. Servoventil nach Anspruch 2, **dadurch gekennzeichnet, dass** die beiden Rotoren (22) untereinander und mit einem einzigen Elektromotor (31) drehmäßig verbunden sind, wobei sich diese beiden Rotoren (22) in jeweiligen feststehenden Mänteln (23) drehen.

4. Servoventil nach Anspruch 2, **dadurch gekennzeichnet, dass** die beiden Rotoren (22) feststehend sind, während die Mäntel (23) miteinander verbunden sind und sich um die jeweiligen Rotoren (22) drehen und dabei mit einem einzigen Elektromotor (31) gekoppelt sind.

5. Servoventil nach einem der Ansprüche 1 bis 4, **dadurch gekennzeichnet, dass** sich der Einlass und die Ausgänge des Hydraulikfluids auf dem feststehenden Teil befinden, der die Mäntel (23) oder die Rotoren (22) umfasst, wobei die Vereinigung der beiden Einheiten (20, 21) aus Rotor und Mantel funktionsmäßig einem Vier-Wege- (1 bis 4) Servoventil (19) entspricht, wobei ein und dieselbe Pumpe (5) diese beiden Einheiten (20, 21) mit Hydraulikfluid versorgt.

6. Servoventil nach Anspruch 1, **dadurch gekennzeichnet, dass** für jede der beiden Einheiten (20, 21), die aus einem Rotor (22) und einem Mantel (23) bestehen, das Drehelement, wie etwa der Rotor oder der Mantel, mit einem getrennten Elektromotor (33, 34) gekoppelt ist, und dass jede dieser beiden Einheiten (20, 21) auch durch eine getrennte Pumpe mit Hydraulikfluid versorgt wird.

## Claims

1. An assist valve for hydraulic power steering of an automotive vehicle, the assist valve (19) being of rotary type and disconnected from the steering column (13), and this valve being controlled by electric motor means driving in rotation at least one member such as rotor or jacket, **characterized in that** it comprises two assemblies (20, 21) hydraulically connected or not, each composed of a rotor (22) and of a jacket (23) surrounding the rotor, three grooves (24 to 29) being provided on the outside of the rotor (22) and on the inside of the jacket (23) of each assembly (20, 21), and the electric motor means (31; 33, 34) being provided for driving in rotation the rotors (22) or the jackets (23) of the aforesaid two assemblies, each rotor-jacket assembly being provided for supplying one of the two chambers (7, 9) of a power cylinder (8) with hydraulic fluid.

2. The assist valve according to claim 1, **characterized in that** the two assemblies (20, 21) each composed of a rotor (22) and of a jacket (23) are coaxially disposed, and **in that** their respective rotating members, rotors or jackets, are coupled together and to a single electric motor (31), which is common to these rotary members and which may be disposed along the same axis.

3. The assist valve according to claim 2, **characterized in that** the two rotors (22) are connected together in rotation as well as to a single electric motor (31), these two rotors (22) rotating in respective fixed jackets (23).

4. The assist valve according to claim 2, **characterized in that** the two rotors (22) are fixed, while the jackets (23) are connected together and rotate around the respective rotors (22), while being coupled to a single electric motor (31).

5. The assist valve according to any one of claims 1 to 4, **characterized in that** the inlet and the outlets of the hydraulic fluid are located on the fixed part, which comprises the jackets (23) or the rotors (22), the two rotor-jacket assemblies (20, 21) functionally achieving together the equivalent of an assist valve (19) with four channels (1 to 4), a single and same pump (5) supplying these two assemblies (20, 21) with hydraulic fluid.

6. The assist valve according to claim 1, **characterized in that**, for each of the two assemblies (20, 21) composed of a rotor (22) and of a jacket (23), the rotary member such as rotor or jacket is coupled to a separate electric motor (33, 34), and **in that** each of these two assemblies (20, 21) is also supplied with hydraulic fluid by a separate pump.
